# EUROPEAN PATENT SPECIFICATION

(11) **EP 2 762 936 B1**
(45) Date of publication and mention of the grant of the patent: **27.09.2017**
(21) Application number: 13153521.3
(22) Date of filing: 31.01.2013
(51) Int. Cl.: G02B 6/42

(54) **Method for forming optoelectronic modules connectable to optical fibers**
Verfahren zur Herstellung von an optische Fasern anschließbaren optoelektronischen Modulen
Procédé pour former des modules optoélectroniques pouvant être connectés à des fibres optiques

(43) Date of publication of application: 06.08.2014
(73) Proprietor: CCS Technology, Inc., Wilmington, DE 19803 (US)
(72) Inventor: Contag, Karsten, 82205 Gilching (DE); Kossat, Rainer, 83229 Aschau (DE)
(74) Representative: Epping - Hermann - Fischer

(56) References cited:
- EP-A2- 0 442 312
- JP-A- S5 691 482
- JP-A- H11 307 868
- JP-A- S55 121 684
- US-A- 4 945 400
- US-A1- 2010 151 614

## Description

Method for forming optoelectronic modules connectable to optical fibers.

### TECHNICAL FIELD

The application refers to a method for forming optoelectronic modules connectable to optical fibers.

### BACKGROUND

Optoelectronic modules connectable to an optical fiber usually comprise an optoelectronic device, such as a vertical cavity surface-emitting laser (VCSEL), a photodiode, a laser diode, a photodetector or any other device capable of emitting or detecting electromagnetic radiation, for instance visible light or infrared radiation. Optical fibers to be coupled to optoelectronic devices need to be aligned with respect to it so as to ensure efficient coupling of the radiation propagating between the endpiece of the optical fiber and the optoelectronic device, with minimum loss of radiation. To this end, the optoelectronic module (comprising the optoelectronic device) may further comprise means for mounting the endpiece of the optical fiber. Connecting the fiber endpiece to these means conventionally comprises considerable effort to achieve proper alignment between the fiber endpiece and the fiber mounting means. Further effort is required even earlier, when the optoelectronic module is fabricated, when connecting the fiber mounting means (but yet without the fiber itself) to the optoelectronic device, like the photodiode or VCSEL, for instance. Conventionally, considerable effort is required for properly aligning the fiber connecting means when connecting it to the optoelectronic device. Thereby, manufacturing time and costs are increased.

US 2010/0151614 A1 discloses a wafer level method of forming optoelectronic devices. It is desirable to provide a method for more efficiently forming optoelectronic modules which are connectable to optical fibers, particularly with less effort for achieving proper alignment of the optoelectronic modules. It is further desirable to provide an optoelectronic module connectable to an optical fiber, which optoelectronic module allows easy self alignment of an optical fiber in relation to the optoelectronic device.

### SUMMARY OF THE INVENTION

The embodiments disclosed in the detailed description include a method as specified in claim 1 for forming optoelectronic modules connectable to optical fibers. According to the application, a plurality of optoelectronic modules comprising fiber connecting means properly aligned with respect to the optoelectronic devices of the optoelectronic modules are formed at the same time on a wafer-level basis, thereby achieving proper alignment for all optoelectronic modules at the same time and thus obviating the need of any individual, time-consuming alignment for any of the plural optoelectronic modules. Furthermore, it is proposed to provide the fiber connecting means in the form of fiber endpiece mounting blocks which can be manufactured as a plurality of fiber endpiece mounting structures provided in a two-dimensional array within one common cover layer formed on a wafer-level basis. After singulating a compound substrate thus formed, a plurality of properly aligned optoelectronic modules is obtained without any considerable effort for alignment being expended.

### BRIEF DESCRIPTION OF THE DRAWINGS

Exemplary embodiments are disclosed herein with respect to the figures in which show:
- Figure 1A: an optoelectronic module of a first embodiment,
- Figure 1B: the optoelectronic module of Figure 1A connected to an optical fiber,
- Figure 2A: an optoelectronic module of a second embodiment,
- Figure 2B: the optoelectronic module of Figure 2A connected to a optical fiber,
- Figure 3A: a substrate usable for the method of the present application,
- Figure 3B: an intermediate compound substrate comprising another, further substrate on top of the substrate of Figure 3A,
- Figures 4A to 5D: sectional views of an optoelectronic module and of a compound substrate used for its production from varying directions,
- Figures 6A to 6D: sectional views of alternative designs of a fiber endpiece mounting block of the optoelectronic module,
- Figures 7A to 8D: sectional views of an optoelectronic module and of a compound substrate used for its production during steps of a manufacturing method according to an embodiment in which portions of a fiber endpiece mounting block are to be removed,
- Figures 9A to 10D: sectional views of an optoelectronic module and of a compound substrate used for its production according to embodiments with a tapered fiber endpiece and
- Figures 11A to 12B: sectional views of an optoelectronic module and of a compound substrate used for its production during steps of a manufacturing method according to an embodiment in which other portions of a fiber endpiece mounting block are to be removed.

### DETAILED DESCRIPTION

In the application, wherever fibers are referred to in the application, this encompasses both optical fibers destined for propagation of visible light as well as fibers used for invisible electromagnetic radiation, such as infrared radiation, for instance. Accordingly, the fibers or optical fibers referred to in the application may likewise include both fibers made of glass as well as fibers made of any other material than glass and useful for propagation of any range of wavelengths of electromagnetic radiation.

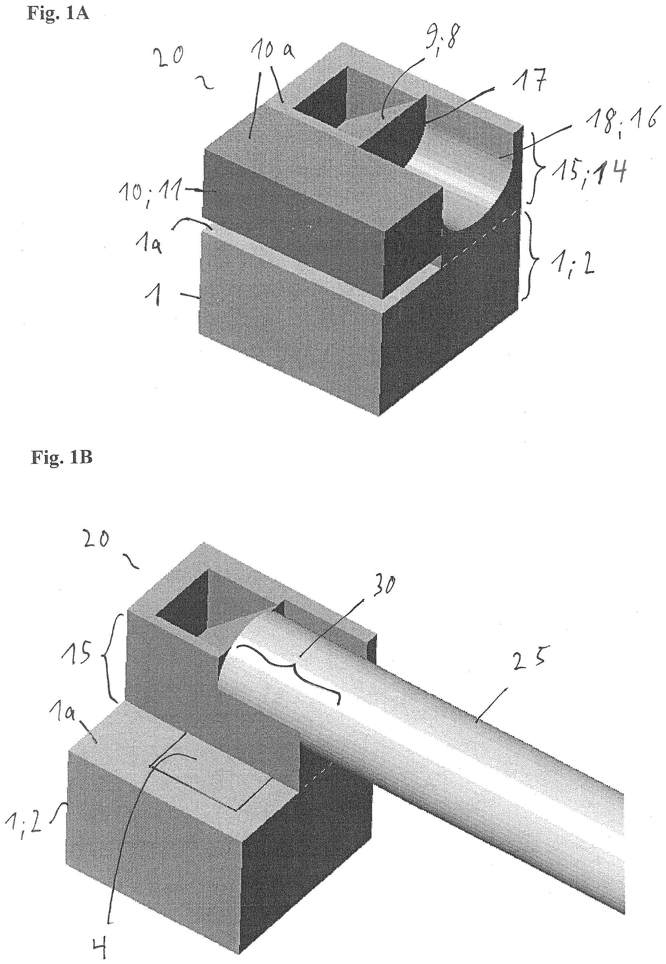

Figure 1A shows a perspective view of a first exemplary embodiment of an optoelectronic module 20. The optoelectronic module 20 comprises a lower portion (a diced portion of a first wafer or substrate 1) in and/or on which an optoelectronic device 2 (such as a VCSEL, a photodiode, a laser diode, a photodetector or any other optoelectronic device) is arranged (not shown in Figure 1A). On the piece of substrate 1, preferably directly on top of its main surface 1a, a fiber endpiece mounting block 15 is provided in a position aligned with respect to the optoelectronic device 2 of the substrate 1. In the following, the "fiber endpiece mounting block 15" is referred to as "FEM block 15" for the sake of brevity. The FEM block 15 can be obtained, on a wafer-level basis, by forming a plurality of fiber endpiece mounting structures (abbreviated as "FEM structures" with reference number 14) in a cover layer on or above the substrate 1 and by subsequently singulating, preferably dicing the compound substrate thus obtained into a plurality of optoelectronic modules 20. Thereby, only one step of global, wafer-level alignment between all optoelectronic devices 2 and all FEM structures or FEM blocks 15 is required, thereby enabling simultaneous alignment for several thousands of optoelectronic modules with minimum effort and costs.

In Figure 1A further details of the exemplary optoelectronic module are displayed. For instance, the FEM block 15 comprises, as the actual, particular FEM structure, a groove 18 into which an optical fiber endpiece 30 (Figure 1B) is insertable (preferably in an orientation parallel to the main surface 1a of the substrate 1 or, alternatively, at angle to the main surface). The substrate 1 can be a semiconductor substrate (made of silicon, indium phosphide or any other semiconductor material, for instance), a glass substrate, a quartz substrate, a ceramic substrate or a synthetic substrate, like a polymer substrate, for instance. Preferably, the substrate 1 is a semiconductor or glass substrate. The FEM block 15 may be a cut-out portion of a further, second substrate 11 or, alternatively, of a cover layer 10 bonded to or deposited on the substrate 1 and patterned (or to be patterned subsequently) so as to include a properly shaped upper surface for yielding a plurality of the FEM blocks 15.

In Figure 1A the FEM block 15 further comprises an end stop surface 17, thereby automatically ensuring alignment of the optical fiber with respect to the optoelectronic module 20 in three directions. Since the depicted embodiment is preferably for fibers with a perpendicularly cleaved (and thus circular) end surface, the light will enter (or be emitted from) the end stop surface 17 of the FEM block 15 which accordingly should be transmissive for the electromagnetic radiation propagating along the fiber. Behind the end stop surface 17, a slanted and/or reflective surface 9 is provided which, like the groove 18, forms part of a (further) indentation or recess in the exposed main surface 10a of the cover layer 10 or substrate 11 forming the FEM block 15. The orientation of the slanted and/or reflective surface 9 is such that the beam propagating along the optical fiber and entering the FEM block 15 is reflected downwards towards the optoelectronic device 2 located underneath the reflective surface 9, preferably in a direction perpendicular to the main surface 1a of the lower substrate 1. Depending on the refractive index n of the material of the FEM block 15, on the orientation of the optical fiber 25 (Figure 1B) and on the exact position of the optoelectronic device 2 below the reflective surface 9, reflection may be accomplished due to total internal reflection (TIR) at the reflective surface 9 or, alternatively, with the aid of a reflective coating 8 (made of gold, silver or any other metallic or dielectric material, for instance) on the reflective surface 9.

Figure 1B shows the optoelectronic module 20 of Figure 1A with an optical fiber 25 connected to it. At least one fiber endpiece 30 is inserted and glued to the groove 18, thereby being fixed as well as automatically, passively self-aligned with respect to the FEM block 15 (and, as a consequence, to the optoelectronic device 2 of the lower substrate 1). By the way, as opposed to Figure 1A, the FEM block 15 of Figure 1B is modified in that its portion laterally outside the groove 18 and the reflective surface 9 is now removed, thus exposing a part of the main surface 1a of the lower substrate 1 in which one or more electrical contacts 4 may be provided and thus now made accessible. Since the FEM block 15 has been aligned with respect to the optoelectronic device 2 in the substrate 1, passive, automated self-alignment of the fiber endpiece with respect to the optoelectronic device 2 is ensured, with no effort of active alignment for the individual optoelectronic module 20 being required. As the piece of substrate 1 as well as the FEM block 15 (as a piece of a cover layer 10 or further substrate 11) are dicing products emerging from dicing or another kind of singulating the compound substrate (comprising the substrate 1 and preferably also a cover layer 10 or a further substrate 11 in addition), the sidewalls of the FEM block 15 are flush with the sidewalls of the piece of first substrate 1 comprising the at least one optoelectronic device 2. Accordingly, wafer-level production according to the method of the application may be evident from the flushing lateral surfaces, i.e. sidewalls of the optoelectronic module 20.

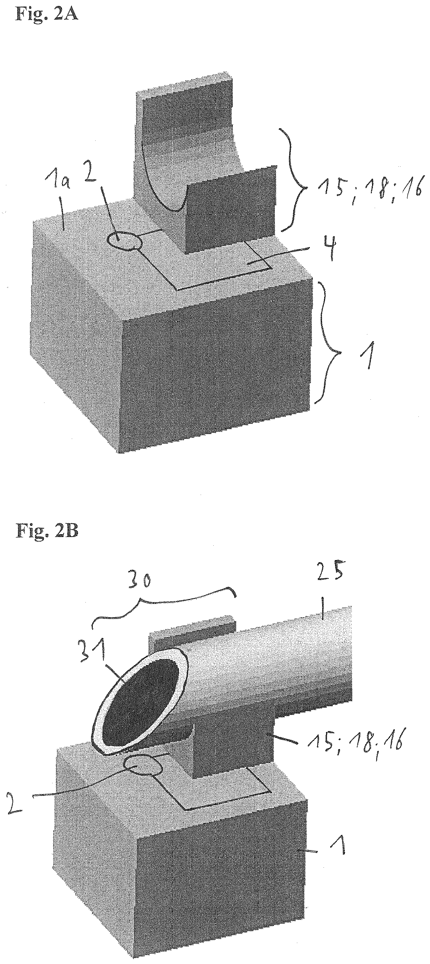

Figure 2A shows an exemplary embodiment of an optoelectronic module 20 intended for a fiber endpiece 30 having a slanted reflective surface 31 for light reflection towards the optoelectronic device 2 of the optoelectronic module 20. Furthermore, in Figure 2B, both the optoelectronic module 20 and the optical fiber 25 are depicted. Whereas Figures 1A to 2B and the further figures, claims and further embodiments of the present application refer to optoelectronic modules 20 for coupling of one fiber or one endpiece in a mounting position (self-aligned to the optoelectronic device in at least two directions), it is to be noted that the optoelectronic module 20 (of any figure, claim or other embodiment of the present application) may likewise be designed for coupling of a plurality of fibers or era plurality of fiber endpieces in aligned mounting positions (for instance for two, three, four or even more fibers or fiber endpieces) in relation to a plurality of optoelectronic devices 2.
Due to the reflective surface 31 of the fiber 25 in Figure 2B, no reflective surface of the FEM block 15 is needed. However, the FEM block 15 still has a groove 18 for inserting the fiber endpiece 30 in which automatic, passive alignment of the fiber endpiece 30 is obtained in at least two directions. As opposed to Figures 1A and 1B, the light reflected at the reflective surface 31 of the fiber 25 will exit the fiber through its cylindrical surface forming the fiber circumference from which it propagates towards the optoelectronic device 2 (like a photodiode) provided in the piece of substrate 1. In case of an irradiating optoelectronic module 20 such as a VCSEL, the direction of the light path is reversed. Anyway, in this embodiment the light need not pass through any material of the FEM block 15. The FEM block 15 may nonetheless comprise additional structures above the optoelectronic device 2 by which micro-optical structures (in addition to the groove or any reflective surfaces) may be formed, such as micro-lenses or others. However, the optoelectronic module 20 at least comprises an FEM block 15 portion by means of the which the fiber endpiece 30 is insertable and attachable to the optoelectronic module 20 in an automatedly, passively self-aligned manner without substantial extra effort for alignment to the individual optoelectronic module 20. As in Figures 1A and 1B, an electrical contact 4 may be exposed on the main surface 1a of the piece of substrate 1. Further features corresponding to those of Figures 1A and 1B are not explicitly mentioned here for the sake of brevity. In both embodiments shown in Figures 1A to 2B, the FEM block 15 (particularly its groove 18) aligned with respect to the optoelectronic device 2 enables passive, effortless self alignment of at least one optical fiber when connected to the optoelectronic module 20.

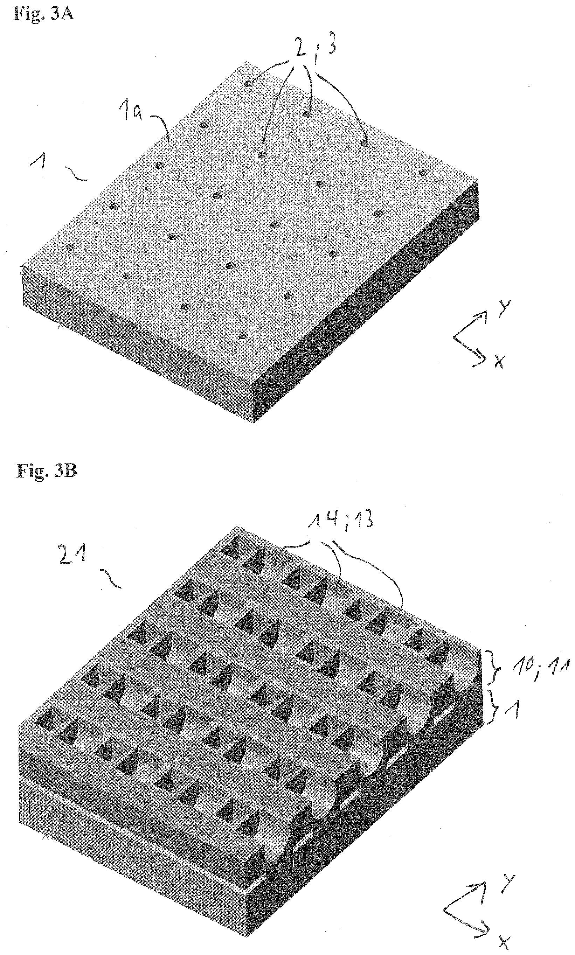

Figure 3A shows a portion of a (lower) substrate 1 (such as a wafer, for instance) in which the plurality of optoelectronic devices 2 has already been formed. Preferably, only optoelectronic devices 2 of one and the same kind are provided as a two-dimensional, first array 3. However, optionally additional devices such as laser drivers or transimpedance amplifiers, or instance), can also be provided. The substrate 1 can be singulated, particularly diced into a plurality of individual optoelectronic devices 20, each being formed of one respective piece of the substrate 1. So far, this would be the conventional method, followed by actively aligning respective fiber connecting means on each optoelectronic module or chip or substrate piece thus obtained. Accordingly, several thousands of individual, time-consuming alignment procedures would have to be undertaken according to a conventional method. According to the application, however, before singulating the substrate 1, at first a cover layer 10 (for instance a further substrate 11) is first patterned and then attached to the substrate 1 (or, alternatively, first attached to the substrate 1 and then patterned), thereby obtaining the compound substrate 21, an exemplary embodiment of which is displayed in Figure 3B. The compound substrate 21 may be formed by assembling or connecting the cover layer 10, or 11, respectively, to the substrate 1, for instance by wafer-bonding or by a layer deposition process. As apparent from Figure 3B, the substrate 1, further substrate 11 and/or compound substrate 21 comprises a plurality of FEM structures 14 forming a second array 13. Each of these FEM structures 14 has to be aligned to a respective one of the optoelectronic devices 2 (which form the first array 3 at the beginning but which will be separated from one another due to wafer dicing). As in Figure 3A, only a sectional view is shown, whereas the entire substrate 1, further substrate 11 and/or compound substrate 21 may instead be a wafer, such as a wafer of 4, 6, 8 or 12 inches in diameter. Like the substrate 1, the further substrate 11 can be a semiconductor wafer (such as a silicon wafer, since it is transmissive for infrared radiation with wavelengths above 1000 nm), or a glass wafer, for instance. Alternatively, the cover layer 10 or further substrate 11 can be made of indium phosphide or any other semiconductor material, of quartz or of a synthetic material (such as a polymer).
One conceivable technique is to simply use a further substrate 11 and to pattern it separately (by treating one or both of its main surfaces and/or by producing structures on top of one or both of its main surfaces, for instance by UV-imprint lithography) before attaching it, representing the cover layer 10, to the (first) substrate 1. One alternative technique is to first bond or otherwise connect the further substrate 11 to the first substrate 1 before subsequently patterning the further substrate 11. Wafer-bonding may particularly include aligning both wafers to one another (be it with or without the FEM structures 14 already formed in the upper layer or substrate 10, 11). If the FEM structures 14 are formed after wafer-bonding, further (wafer-level) alignment is performed in the process of patterning the upper layer or substrate 10, 11 simultaneously for all modules to be fabricated out of the compound wafer 21. A third alternative technique is to deposit (for instance by a deposition technique as used in semiconductor manufacturing or in micro-electro-mechanical system production), grow or otherwise create the cover layer 10 on the substrate 1 and to subsequently apply one or more process steps (such as those known from semiconductor manufacturing or any other technical field) for patterning the cover layer thus formed. A fourth conceivable technique is to produce any FEM structures or other micro-structures directly on and/or in the (optoelectronical) substrate 1 (using the substrate itself, rather than a compound substrate 21 of two or more substrates or layers stacked on one another); this may for instance be done using UV-imprint lithography. All these techniques may be applied to any embodiment of the claims, figures or parts of the specification of this application. These methods may further be combined with one another.
No matter which of these techniques enumerated above is or are applied, in all cases the method will benefit from the overall alignment step for aligning the FEM structures 14 to the optoelectronic devices 2 (forming the first array 3), which alignment can be executed on a wafer-level basis (as done in semiconductor manufacturing by means of alignment marks, for instance, when patterning or otherwise treating a top layer in a properly aligned position relative to one or more layers or micro-electronic structures underneath). Accordingly, after singulating, particularly dicing the (compound) substrate 1 or 21 of Figure 3A or 3B into a plurality of individual optoelectronic modules 20, no substantial active alignment of the FEM structures 14 or FEM blocks 15 (formed in the cover layer 10, the further substrate 11 or even in the substrate 1 itself) with respect to the optoelectronic devices 2 of the diced pieces of substrate 1 is necessitated any longer, since the at least one FEM block 15 of each optoelectronic module 20 is already self-aligned (in at least two directions or even in three directions) to the at least one optoelectronic device 2 of the respective optoelectronic module 20.

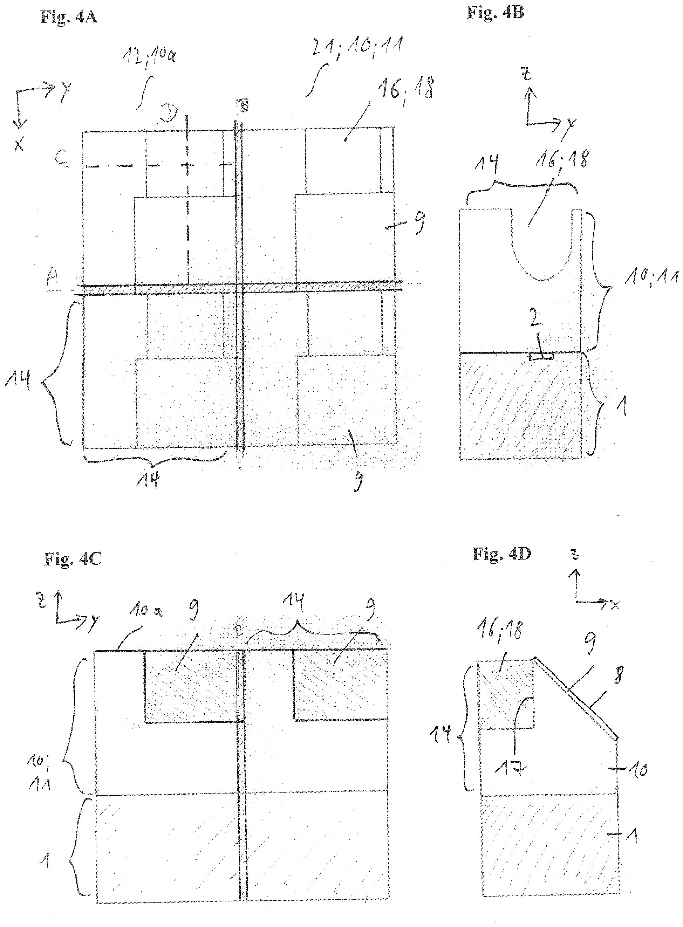

Figure 4A shows a top view of a section of a compound substrate, showing its cover layer 10 or upper, further substrate 11, from above. A and B denote cut lines along which the compound substrate will be diced or otherwise singulated into single optoelectronic modules, whereas C and D denote lines along which further cross-sectional view are shown in Figures 4B and 4D. The embodiment of Figure 4A substantially corresponds to the embodiment of Figures 1A and 1B in which a groove 18, as well as a slanted and/or reflective surface 9 (arranged outside an optical fiber endpiece) for reflecting light are both formed in the cover layer 10 or further substrate 11 (or even in the first substrate 1 itself). In the rest of the specification, the layer or substrate in which the plural fiber endpiece mounting structures 14 (FEM structures) are formed or are to be formed is generally referred to as the cover layer 10 for the sake of brevity, irrespective of whether the cover layer is realized as a further substrate 11 or is realized as a layer deposited onto the substrate 1 (and subsequently patterned to form the FEM structures) or is even realized as a part of the first substrate 1 itself. This applies to Figure 4A as well as to any further figure addressed herein below.

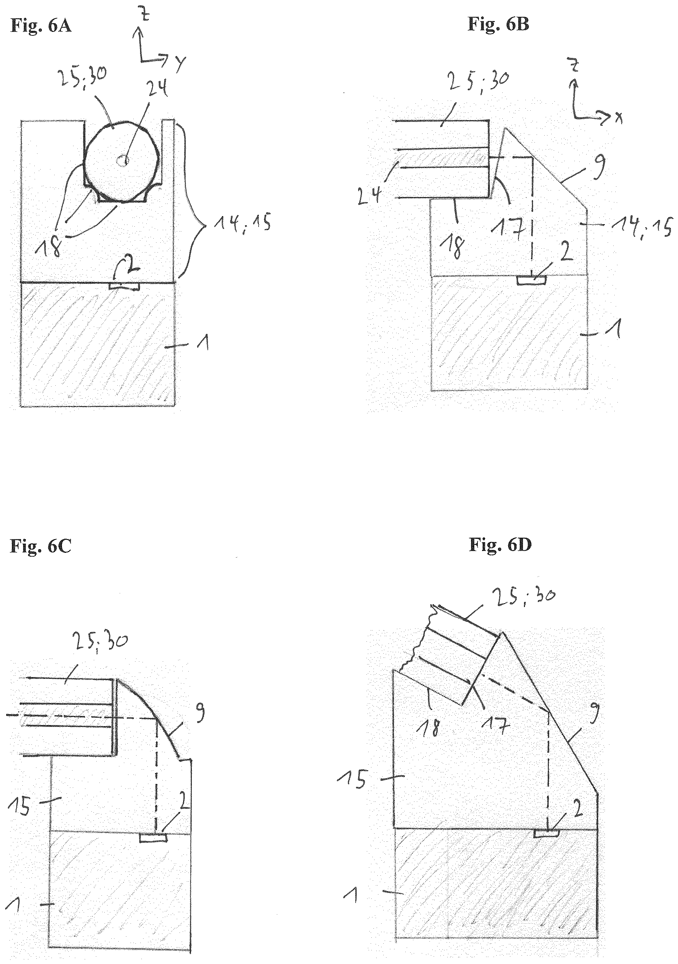

In the top view of Figure 4A, due to the dicing or cutting lines A and B, four FEM structures 14 are shown which, upon dicing, will then be or comprise the FEM blocks 15 of the individual optoelectronic modules 20. Each FEM structure 14 at least comprises a surface portion 16 shaped to receive a fiber endpiece and to fix its position in preferably at least two directions. The surface portion 16 preferably is a groove 18 for receiving a portion of the optical fiber 25 (such as an end portion or a fiber portion adjacent to or close to an end portion of the optical fiber 25, for instance). Although the grooves are not yet accessible by the fibers, they will become accessible upon dicing of the compound substrate 21. Figure 4B shows a cross-sectional view along line C of Figure 4A, thus showing that the groove 18 is a U-shaped groove, for instance. Any other cross-sectional shape, like a V-groove or that of Figure 6A may likewise be used. Figure 4B shows the lateral alignment of the groove 18 with respect to the optoelectronic device 2 (such as a photodiode or a VCSEL) in the lateral direction y. The FEM structure 14 may, in addition to the groove 18, further comprise one or more micro-optical structures. One of them is represented by the slanted reflective surface 9 depicted in Figure 4A. However, in addition or instead, further micro-optics structures (like micro-lenses) may be formed in the FEM structure 14, for instance in its (bottom) surface facing the substrate 1. Thereby, electromagnetic radiation may be focussed in a region above the optoelectronic device 2.

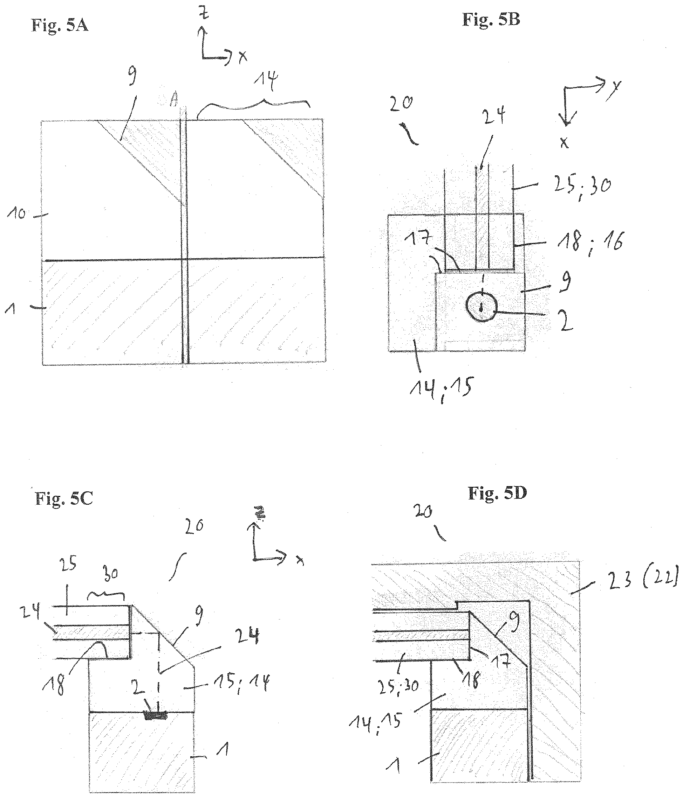

Figure 4C shows a cross-sectional view of Figure 4A along the cutting line A, thus showing that the reflective surfaces 9 are formed as cut-outs in an exposed main surface 10a of the cover layer 10. As is further apparent from Figure 4C, the reflective surface 9 may extend into the region of the cutting line B. Since the dicing process is prone to comparably low precision, the actual position of the cut line B may vary in the order of 10 to 20 microns. Accordingly, in order to avoid excessive debris and/or unintended creation of fragile structures at the lateral edges of the FEM structures 14 caused by dicing, it is preferred that the transition between the reflective surface 9 (forming part of an indentation locally reducing the thickness (in vertical direction z) of the cover layer 10 and compared to its unreduced thickness of the adjacent FEM structure 14) is bridging over or at least extending into the region of the cutting line B as far as possible. The same applies to the cutting line A; the reflective surface 9 should also extend across the entire width of the cutting line A (as apparent from Figure 5A in which the recess formed to obtain the slanted, reflective surface 9 is completely overlapping with the intended area for the dicing or cutting line A).
Figure 4D shows the reflective surface 9 which preferably is inclined by about 45° (or a modestly deviating angle of between 35° and 55°) with regard to the main surface 10a. Optionally, a reflective coating 8 may be formed on the surface 9 from outside so as to increase the degree of reflection (when no total internal reflection can be exploited). The reflective coating 8 may be formed of gold or silver, from any other metal or alloy or of a dielectric. Depending on the refractive index n of the material of the cover layer 10 and on further circumstances, however, reflection at the reflective surface 9 can be achieved by total internal reflection. In both cases the slanted surface 9 is deflecting a beam of light or other kind of electromagnetic radiation exiting the fiber endpiece so as to approach the surface of the substrate 1 (or vice versa). As apparent from Figure 4D, according to this embodiment the FEM structure 14 comprises an end stop surface 17 confining the groove 18 along the lateral direction x, thus adapting the groove 18 for optical fibers having a perpendicular, circular end surface.

Figure 5B shows a top view of one individual FEM block 15 as obtained from one single FEM structure 14 upon dicing along the cutting lines A and B of Figure 4A. As apparent from Figure 5B, a beam of electromagnetic radiation 24 (such as a light beam) exiting a perpendicularly cut (or cleaved or otherwise obtained) end surface of the endpiece 30 of a fiber 25 is entering the material of the FEM block 15 through the end stop surface 17, is reflected by the slanted surface 9 and then reflected towards the piece of substrate 1 underneath the FEM block 15 (for those embodiments in which the FEM block is formed in the cover layer 10 or further substrate 11, rather than in the substrate 1 itself) so as to impinge on the optoelectronic device 2. Alternatively, vice versa, a beam of electromagnetic radiation 24 emitted by the optoelectronic device 2 is passing the FEM block 15 until it arrives at the slanted surface 9 reflecting it towards the end stop surface 17 behind which the fiber endpiece 30 is held in a self-aligned manner by the groove 18. By the way, it is to be noted that the reflective surface 9 is optional. Anyway, the groove 18 or other kind of surface portion 16 shaped to secure the fiber endpiece 30 in at least two (or, in this embodiment, even three) directions automatically obtains self-alignment of the fiber endpiece 30 with respect to both the FEM block 15 itself and to the optoelectronic device 2. Furthermore, since alignment between the FEM block 15 and the (lower part of the) substrate 1 comprising the optoelectronic device 2 has been achieved for all optoelectronic modules simultaneously on a wafer-level basis prior to dicing, no step of aligning the FEM block 15 with respect to the optoelectronic device 2 is needed any more. Accordingly, manufacturing effort and production costs are dramatically reduced due to the method of the present application.

Figure 5C shows a cross-sectional side view through the optoelectronic module of Figure 5B (with the light path along the x-z-plane). As opposed to Figure 5C, the angle of reflection at the reflective surface 9 can be different from 90°. Furthermore, the inclination angle of the reflective surface 9 can be other than 45°. Accordingly, corresponding variations of the embodiment may be included as long as the active area of the optoelectronic device 2, and the position and direction of the light beam 24 at the end of the optical fiber, are chosen appropriately with regard to the position, orientation and/or shape of the inclined surface 9. Figure 5D shows the optoelectronic module 20 of Figure 5C with an attached protective cover element 23 for protecting and shielding the exposed reflective surface 9 and/or securing the fiber end piece 30 in the groove. Alternatively, prior to dicing the (compound) substrate into plural optoelectronic modules 20, a protective cover substrate 22 may be attached onto the (compound) substrate. In both cases the respective protection element 22, 23 advantageously provides hermetic sealing of the reflective element, additional mechanical rigidity of the fiber attachment (particularly in the case that it extends along the axis of the optical fiber and is also attached to the piece of substrate 1 and/or to a printed circuit board underneath). The protection element 22, 23 may be produced by precision injection molding or any other technique; it preferably fits closely to the sides of the optoelectronic module 20 and to the top side of the optical fiber 25. This improves hermetic sealing for protecting the reflective element 9. As is further apparent from Figure 5D, the inner side of the protective cover element 23 (or, alternatively, of the wafer-level protective cover substrate 22) may contain a recess above and close to the reflective surface 9 in order to prevent creep of adhesive onto it when the fiber endpiece 30 is glued into the groove 18 and against the end stop surface 17.

Figure 6A shows an alternative cross-section of the groove 18 equally useful for self aligning the position of the fiber endpiece 30 along at least two directions y, z (Figure 6A). The shape of the groove 18 as shown in Figure 6A is easy to accomplish using lithographic structuring techniques known from semiconductor manufacturing or MEMS production, for instance. Regardless of the particular shape of the bottom region of the groove 18, the top opening of the groove may be chosen to be wider for easier insertion of the optical fiber 25 from above. Furthermore, regardless of the particular shape of the groove chosen, it is beneficial to locate the position of the groove along the lateral direction y in a more centered position of the respective FEM structure 14, or FEM block 15 than illustrated in Figure 6A (if possible, in the middle of the FEM block 15 along the direction y) in order to increase the sturdiness and stability of it. Further variations may be chosen with regard to the aspect ratio which can be decreased by widening the upper groove portion, for instance, or with regard to the length of the groove along the other lateral direction x (along which the groove preferably extends to more than one, preferably more than two, times the diameter of the optical fiber 25). A specially adapted VCSEL wafer design may be chosen for this, if necessary or expedient. Figure 6B shows an embodiment in which the end stop surface 17 of the groove 18 is inclined rather than perpendicular to the axial direction of the groove (and of the fiber 25 to be inserted therein). The fiber endpiece 30 still abuts against the lower edge of the end stop surface 17, and (like in the other embodiments) the fiber endpiece 30 may be glued into the groove 18 using an adhesive. The inclined orientation of the end stop surface advantageously prevents inclusion of air bubbles in the adhesive filling the interstice between the perpendicular, circular fiber end surface and the end stop surface 17. The orientation of the reflective surface 9 can be offset correspondingly, depending on the refractive index n of the FEM block 15 and of the adhesive. Figure 6C shows an embodiment in which the reflective surface 9 is curved rather than planar. Thereby, the reflective surface 9 can be given a focusing shape, thereby increasing the coupling efficiency between the optical fiber 25 and the optoelectronic device 2. The reflective surface 9 can be curved differently within the drawing plane (shown in Figure 6C) and in the direction perpendicular to the drawing plane. Figure 6D shows an embodiment in which the fiber endpiece 30 is oriented with its axis at an angle to the surface of the substrate supporting the FEM block 15. Accordingly, the axis of the optical fiber is not parallel to the plane of the substrate 1 or its active area. The angle may for instance be chosen between 20° to 70°, preferably between 30° and 50°. Such an embodiment may be used for particular applications, for instance in the event that the angle of total internal reflection at the reflective surface 9 is different from 45°. This may also be beneficial for applications where a high density of fibers attached to optoelectronic modules arranged in a two-dimensional array has to be achieved.

Generally, the embodiments shown throughout the application (including the claims and the figures) may be combined with one another. For instance, one or a plurality of steps of any embodiment of a method disclosed herein may be varied according to another method or geometrical shape to be achieved. In particular, modifications and variations of the shape of any constructional element (such as the shape of the substrate 1, of the FEM structure 14 or the FEM block 15, or of its portions like the groove, the reflective surface or the end stop surface or other partial geometrical shapes) may be varied according to any other example disclosed in the application. For instance, the embodiments of Figures 5C, 5D and 6A to 6D may be combined with one another.

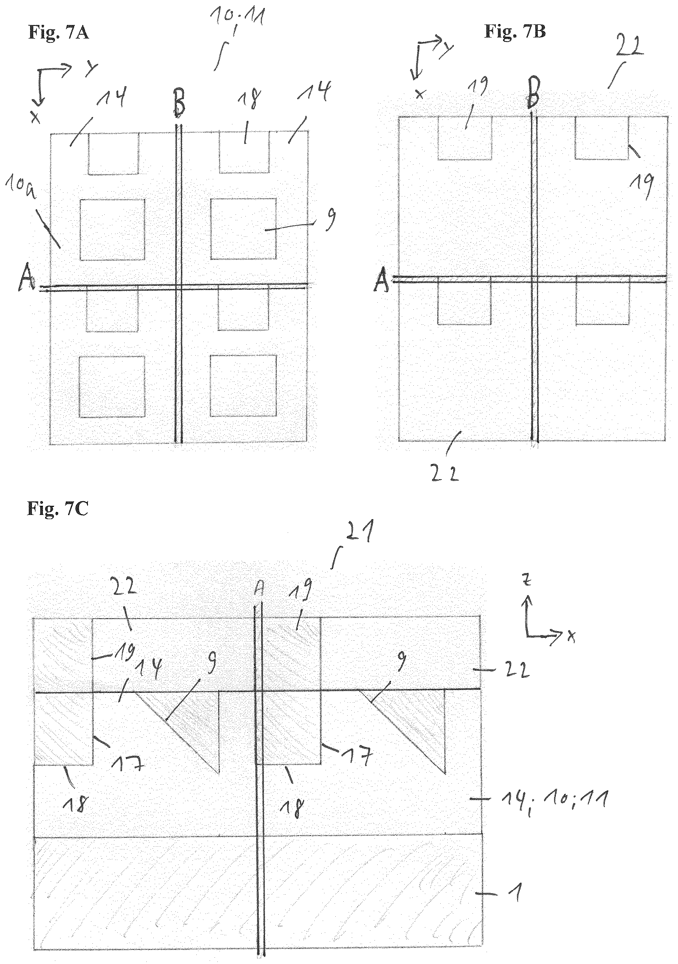

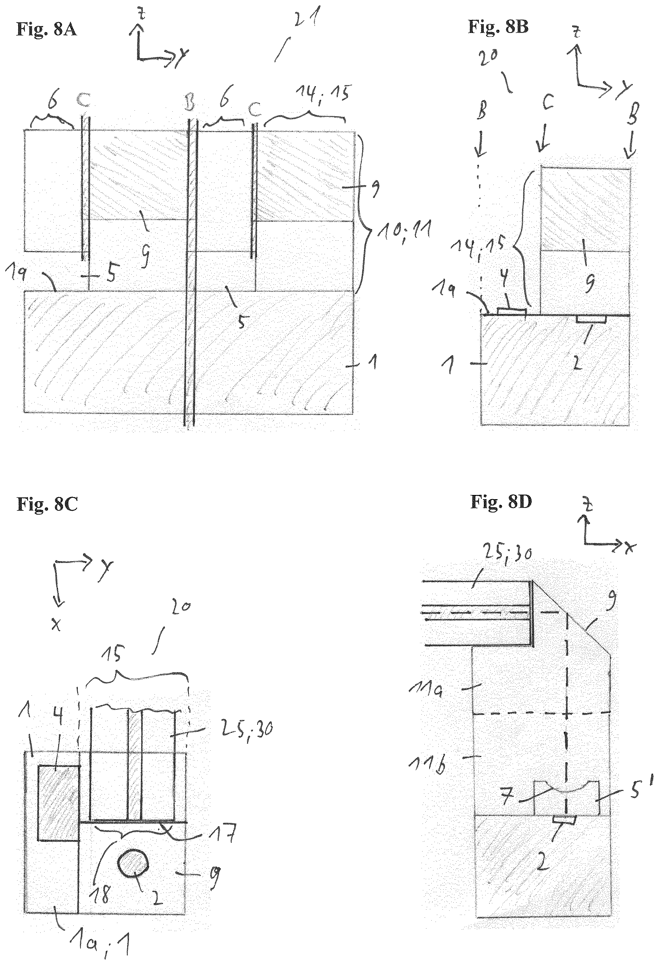

Figures 7A to 7C show an embodiment in which a third substrate, namely a protective cover substrate 22, is included in the compound substrate 21 (Figure 7C). Thus, on a wafer-level basis, all optoelectronic modules 20 to be obtained after dicing will automatically be provided with a protective cover. This embodiment is an alternative to Figure 5D in which the individual optoelectronic modules 20 are provided with an individual protective cover element 23 to be attached only after dicing. Figure 7A shows a top view of the cover layer 10 or further substrate 11 in which the plurality of FEM structures 14 is formed. Apart from the recesses constituting the grooves 18 and the indentations forming the slanted surfaces 9, the surrounding portions of the upper main surface 10a of the cover layer 10 (or further substrate 11, respectively) are flat and have the maximum, full thickness or height of the cover layer 10 (Figure 7C). Accordingly, as apparent from Figure 7A, the indentation forming the reflective surface 9 has no contact with any one of the cutting lines A or B. Furthermore, according to Figure 7B showing the protective cover substrate 22 in top view, no opening is formed in regions covering the slanted surfaces 9 of the cover layer 10 (see also Figure 7A and the cross-sectional view of Figure 7C). Accordingly, hermetical sealing of the reflective surface 9 is achieved which is particularly useful in the case that the reflection at the slanted surface 9 is based on total internal reflection, without any reflective coating above it. The only openings in the protective cover layer 22 are those corresponding to the grooves 18 in the cover layer 10 underneath. During dicing, only the grooves 18 and the corresponding cut-outs in the uppermost protective cover substrate 22 are opened from a lateral direction by a respective cutting line A. The protective cover substrate 22 may be made of glass or silicon, for instance, and is aligned to the substrate 1 and/or to the cover layer 10 (or further substrate 11, respectively) on a wafer-level basis. It may be bonded to the top surface of the cover layer 10 (or of substrate 1 or further substrate 11, respectively) before, or alternatively, after it has been patterned. When patterning the protective cover substrate 22, a wafer-level alignment of any structures or patterns to be formed in it may be included when patterning it. Anyway, wafer-level based production of the plurality of optoelectronic modules using the protective cover substrate 22 easily achieves protection from moisture or dirt due to the enclosure of the reflective surfaces 9 from all sides and from above by the material of the FEM structure 14 (or FEM block 15, respectively) and by the protective cover substrate 22. The recesses 19 (cut-outs or openings) shown in the protective cover substrate 22 of Figures 7B and 7C are optional; they may be provided for easier insertion of the fiber endpieces 30 into the grooves 18 of the cover layer 10, further substrate 11 or substrate 1 underneath. Alternatively, the protective cover substrate 22 may be flat and free of any recesses 19 or other kind of cut-outs or openings (even in positions corresponding to the grooves).
By the way, all embodiments of the application may further be varied in two further ways, depending on whether the optoelectronic modules 20 to be formed are flip-chip structures with all electric contacts being on the bottom side opposite to the surface carrying the optoelectronic device 2, or whether at least some of the electrical contacts are provided at the same main surface 1a as the optoelectronic device 2. In the latter case, at least some free space may be left by the FEM block 15 above in order to allow easy access to any upper contact. For instance, Figure 1A shows a bottom groove in the FEM structure 15 above a part of the main surface 1a where at least one electrical contact 4 (Figure 1B) is provided and exposed later (see Figure 1B). The elevated portion (recessed from below) of the FEM block 15 may thus be removed (rather than maintained) above the upper electrical contact 4 (see also Figures 2A, 2B or 3B). Also any other figure or embodiment of the application may be modified to enable easier access to any electrical contact provided on the surface or interface surface where the optoelectronic device 2 resides. In order to shape the FEM structures 14 accordingly (which are to become the FEM blocks 15 of each optoelectronic module 20 to be formed upon dicing), a part of them may be removed, for instance resulting in a narrower shape of them on each final optoelectronic module 20 as indicated in Figure 8B. As shown therein, in at least one lateral direction y the FEM block 15 is narrower than the piece of substrate 1 underneath. Accordingly, at the beginning each FEM structure 14 comprises a part which has to be disposed of later. Figure 8A indicates one conceivable structure and method of patterning the cover layer 10 such that the FEM blocks 15 are finally narrower than the pieces of the substrate 1. As apparent from Figure 8A, on the bottom side of the cover layer 10 or further substrate 11, a plurality of bottom grooves 5 is provided in which the material does not extend to the main surface 1a (Figure 8B) of the lowermost substrate 1. Those portions of the material of the cover layer 10 or further substrate 11 located on top of the bottom grooves 5 represent debris portions 6 to be disposed of. They can be severed by partially cutting, along lines C shown in Figures 8A and 8B, so as to only cut through the further substrate 11 or cover layer 10 (at least to a depth sufficiently large to reach the top of the bottom grooves 5), but without cutting through the substrate 1. Thereby the debris portions 6 will fall off, at the latest when the compound substrate is diced along the cutting lines A and B to obtain the plurality of optoelectronic modules 20.

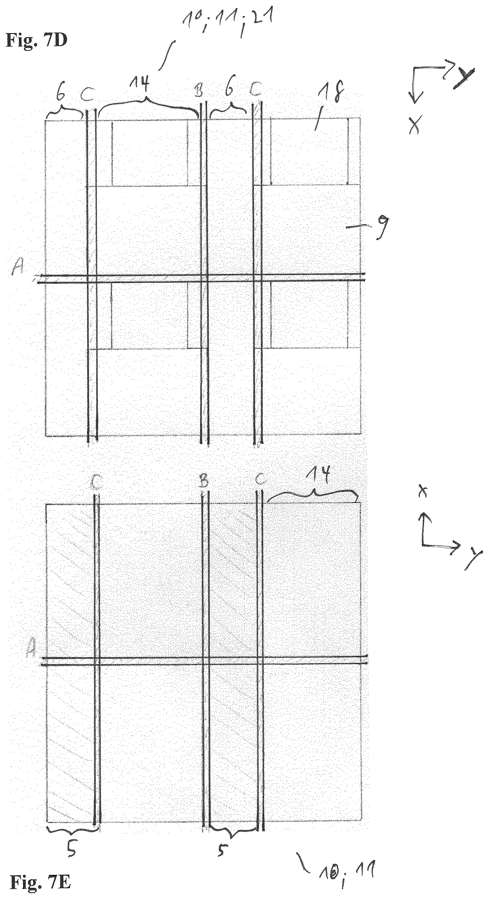

Figures 7D and 7E illustrate the position of all three kinds of cutting lines A, B and C, with the cutting lines C only extending into the cover layer 10 or further substrate 11 (for shaping the FEM structures 14) but without extending into the optoelectronic substrate 1. Figure 7D shows a top view of the cover layer 10 or further substrate 11, whereas Figure 7E shows its bottom side. As apparent from the bottom view of Figure 7E, the grooves extend between the cut lines B and C. The bottom grooves may, for instance, be formed by etching these grooves into the bottom surface of the further substrate 11, prior to mounting it to the optoelectronic substrate 1 for obtaining the compound substrate 21. The bottom grooves 5 should at least partially overlap with the electrical contacts on the main surface 1a. After the further patterning steps are completed to obtain the compound wafer 21 of Figure 8A, the further substrate 11 or cover layer 10 will be cut from above along the line C, thereby severing the debris portions 6 from those portions intended to be the final FEM blocks 15. When subsequently cutting through the entire thickness of the compound substrate 21 along the cutting lines B (as well as A), the debris portions 6 will fall off the optoelectronic modules 20 thus formed. Thereby, narrower FEM blocks are obtained as, for instance, indicated in Figure 1B, Figure 2A, Figure 2B. Figure 7D additionally shows the position of the cutting lines C (for partial severing of the further substrate 11 from above until the bottom grooves are reached) and the cutting lines B and A for separating the individual optoelectronic modules to be formed from one another. Preferably, the position of the cutting lines C is the same as used for the bottom grooves (bottom view in Figure 7E). Anyway, the position of the cutting lines C for the cutting from above (Figure 7D) will be chosen such that the reflective surfaces 9, but not the grooves 18 for fiber endpiece insertion are overlapped.

Figure 8C shows an exemplary top view of an optoelectronic module 20 with an FEM block 15 narrower along one lateral direction y than the piece of substrate 1 underneath. As apparent from Figure 8C, the at least one electrical contact 4 is exposed at the accessible portion of the main surface 1a of the optoelectronic substrate 1, whereas the reduced width of the FEM block 15 corresponds to the distance between the cutting lines C and B as apparent from Figure 8A. Figure 8C further shows the reflective, or at least slanted, surface 9, the groove 18 for fiber insertion, the optoelectronic device 2 (such as a photodiode or a VCSEL) arranged in and/or on the main surface 1a of the piece of substrate 1, as well as the end stop layer 17 confining the lateral end of the groove. Of course, this top view may be varied corresponding to any embodiment described in this application.

With regard to Figures 7D to 8C, in case that two-sided structuring or patterning of the cover layer 10 or further substrate 11 is too costly using available techniques, or otherwise inexpedient, it is also conceivable to bond together two separate further substrates 11a, 11b as indicated in Figure 8D, and to use them in combination to obtain the (combined) further substrate 11. This may be done independently of the further features additionally shown in Figure 8D, particularly independently from the micro-optical element 7 indicated in Figure 8D. Also in any other figure, claim or other embodiment of this application, any cover layer 10 or further substrate 11 may be replaced with such a combined substrate 11a, 11b made up of two halves. By the way, further layers and/or substrates may also be present between any of the substrates and/or layers mentioned in the application.

As outlined herein above, manifold variations may be realized regarding the shaping of the FEM structures 14 which are to become the FEM blocks 15 upon singulating the compound substrate. One particularly advantageous feature is the inclusion of micro-optical elements 7, as indicated in Figure 8D, in the FEM structures 14, for instance of micro-optical lenses or other focussing, refracting or diffracting elements. Accordingly, the reflective surface does not need to be the only optically active structure of the FEM blocks 15 finally produced. The focusing lens displayed in Figure 8D may be formed by patterning a further, additional bottom groove 5' only locally provided in a position corresponding to the optoelectronic device 2 (in contrast to the extended bottom grooves 5 defining the location of the debris portions 6 of Figure 8A). Inclusion of such micro-optical elements 7 may be used both for conventional and flip-chip optoelectronic wafers 1. Precise shaping of the micro-optical elements (like lenses) may be facilitated by separately patterning two respective further substrates 11a, 11b before combining them (which may also serve to increase the optical path length between the optoelectronic device 2 and the optical fiber 25), but two-sided structuring of one single substrate 11 or wafer to be used for carrying the micro-optical element is also possible.

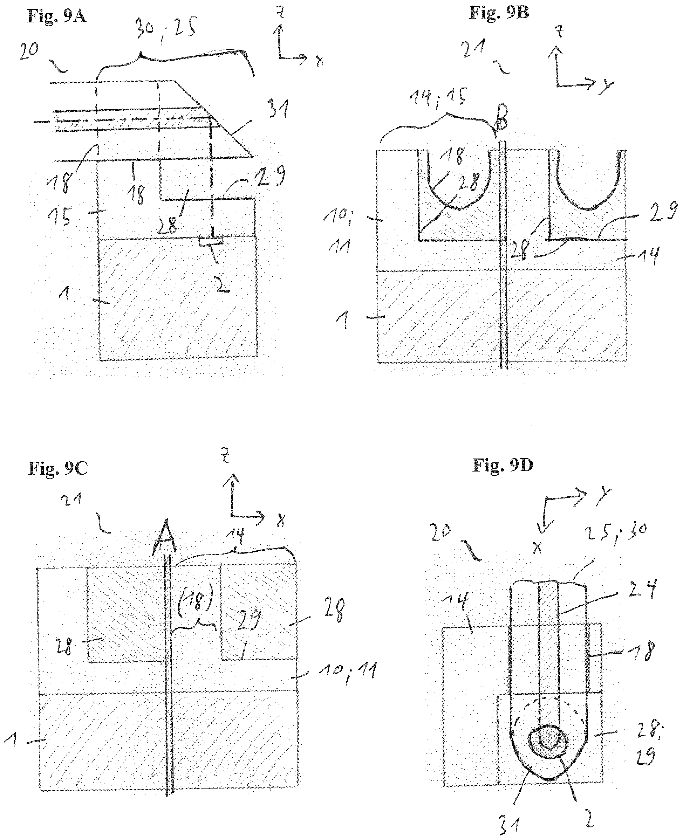

In the following, further embodiments are described in which a reflective fiber surface 31 (rather than a reflective surface 9 of the optoelectronic device) is used for reflecting the beam irradiated or to be received by the optoelectronic device 2. In the following, only the features different from those already explained above are described with reference to Figures 9A to 12B.

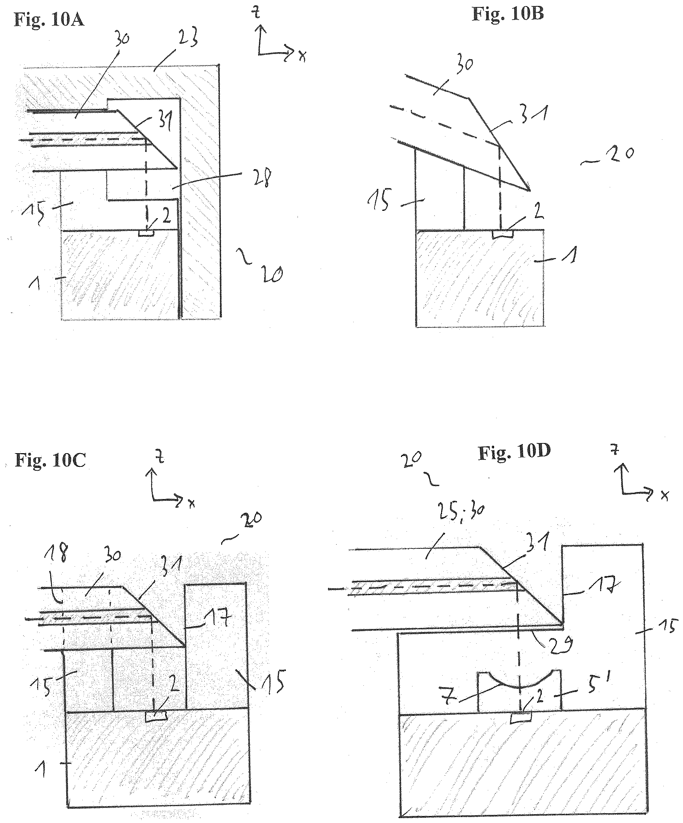

In Figures 9A to 10A and 10D, the material of the FEM structures 14 or FEM blocks 15 is transparent for the electromagnetic radiation emitted or received by the optoelectronic element 2. Accordingly, the light may partially propagate through portions of this material which thus may be present along the path of radiation. Again, as in most of the embodiments of the present application, the direction of emission or reception of light by the optoelectronic device 2 is mainly perpendicular to the main plane 1a of the substrate 1 whereas the direction of the optical fiber axis is substantially parallel to the main surface (wafer plane) of the substrate 1. By the way, in all figures of the application, a number of (a few or plural) optoelectronic devices 2 (rather than only a single one) may be provided on each optoelectronic module. Furthermore, preferably the compound substrate 21, as in all other embodiments and figures of the application, may contain optoelectronic devices 2 of only one kind (such as only photodiodes or only VCSELs) forming the first array 3. However, alternatively, other electronic devices, such as laser drivers or trans-impedance amplifiers (TIAs) may for instance be located in addition to the actual optoelectronic devices 2 on the substrate 1 (as well as on the final optoelectronic modules 20). Furthermore, as in all other figures or other embodiments of the application, the substrate 1 may be formed of silicon, indium phosphide, any other semiconductor material, of ceramics or glass, for instance. Generally, the materials of the respective substrates 1,11 may be chosen to be similar with regard to their thermal expansion coefficient (and that of the optical fiber). Furthermore, the FEM structures 14 may also be formed of a UV-curable resist (to be hardened later). Anyway, the material of the cover layer or (further) substrate 1, 10, 11 (in which the FEM structures 14 are to be formed) may be transparent or opaque at the wavelength emitted by or to be received by the optoelectronic devices. Any conventional technique known from semiconductor manufacturing or MEMS (micro-electro-mechanical systems) production may be applied (particularly planar production methods), especially in the case that a silicon wafer or another semiconductor wafer or a glass wafer is used as the optoelectronic substrate 1. In the case of a glass wafer used as the substrate 1 or the further substrate 11, UV imprint lithography may be applied where a structured stamp is produced by lithographic methods using photo-sensitive material and the stamp is then used to shape the UV-curable resist (such as PAK-01). Thereby, in particular micro-optical structures, such as for a glass substrate, may be formed. Alternatively, a further resist material layer may be deposited on a substrate of glass or another material and may then be patterned lithographically (thereby, for instance, forming patterned polymer structures on a semiconductor substrate, a glass substrate or another substrate 1 mentioned in the application, particularly by means of UV-imprint lithography). Subsequently, the pattern of the further resist structure is transferred into the (glass) substrate by reactive ion etching or another technique. Yet alternatively, the FEM structures may be formed by (high precision) injection molding. Furthermore, any other conventional method for producing micro-structures can be applied, thereby for instance forming the groove, any reflective surface of the cover layer or any other three-dimensional structures or shapes. All the statements of this paragraph apply to any figure or other embodiment of the present application.

With regard to Figures 9A to 9D, an optoelectronic module 20 is formed which does not comprise any slanted, reflective layer since the fiber endpiece 30 itself will be provided with a reflective fiber surface 31 sloped at an angle of about 45°, for instance. Accordingly, the fiber endpiece 30 is held only by the groove 18, whereas the tip of the endpiece 30 is exposed in a (widened or otherwise shaped) window or recess 28 behind, near or even within the groove 18 (or by the groove itself). The depicted shape of the recess 28 is only exemplary. In Figure 9A a portion of the material (of a certain thickness) of the FEM block 15 is maintained on top of the optoelectronic device 2, the material thus having to be transparent for the irradiated or received radiation. The surface 29 at the bottom of the recess 28 may optionally be covered with an anti-reflective coating (such as a dielectric layer). Thereby back-reflection of the beam of radiation (when arriving at the surface 29) is inhibited or at least reduced. The groove 18 and other portions of the FEM block 15 may be masked when depositing the optional anti-reflective coating. Furthermore, the surface 29 or the window or widened recess 28 may be sloped or inclined by a comparatively small angle (for instance up to 5° or up to 10°) so as to prevent back reflections into the optical fiber or into the optoelectronic device 2. Furthermore, the surface 29 of the window or recess 28 may be shaped so as to comprise a micro-optical element, for instance a focussing lens, in order to focus the light beam and thereby increase the coupling efficiency. In particular, the curvature of a such a micro-optical element (see for instance Figure 10D or alternatively, Figure 8D) not specifically illustrated in Figure 9A to 9D may be different in the directions parallel and perpendicular to the optical fiber axis (that is parallel and perpendicular to the drawing plane of Figure 9A) so as to compensate for the asymmetric lensing effect as the light passes through the circumference, i.e. through the cylindrical outer surface of the optical fiber 25. Alternatively or additionally, the reflective fiber surface 31 may have a curvature or two different curvatures. The reflective fiber surface 31 may, for instance, be cleaved (for instance laser-cleaved) and/or polished and have an angle of approximately 45° or slightly different from 45°, due to the proper inclination angle for total internal reflection. The slanted fiber end face 31 may be covered with a coating to achieve reflection and, furthermore, it may be lens-shaped or otherwise curved (rather than flat) in order to achieve additional focusing.
Figure 9B shows a portion of the compound substrate 21 corresponding to two optoelectronic modules 20 of Figure 9A to be formed. Figure 9C shows another cross-sectional view along the direction of the fiber axis to be inserted later. As apparent from Figures 9B and 9C, the widened recess 28 should reach into the areas of the cutting lines A and B in order to avoid excessive debris or the creation of fragile structures. Figure 9D is a top view on the optoelectronic module 20 of Figure 9A, thus showing that the fiber endpiece 30 extends beyond the groove 18 in the lateral direction x so as to extend, with its inclined reflective fiber surface 31, above the bottom surface 29 of the recess 28. The lateral position of the center of the reflective fiber surface 31 may correspond to the position of the optoelectronic device. However, the actual position may vary along the direction x so as to improve coupling efficiency (for instance in order to exploit of total internal reflection). The groove 18 automatically achieves proper alignment of the fiber endpiece along the directions y and z (passive alignment). Merely along the direction x an active alignment or positioning of the endpiece is needed, which can be done by monitoring and maximizing optical transmission between the fiber and the optoelectronic device, by vision-based alignment (using cameras and/or image processing) or any other way. For attaching the fiber endpiece 30 to the optoelectronic module 20, the module may preferably (temporarily or permanently) be soldered, glued or otherwise mounted to a printed circuit board or another substrate. Alternatively, the fiber can be attached prior to any soldering or gluing. Thus the optoelectronic module 20 may optionally be mounted on a printed circuit board or substrate before or after fiber attachment is performed. By the way, the step of attaching the fiber 25 to the optoelectronic module 20 may be performed using an adhesive (such as a UV-curing epoxy) or using soldering, for instance by metal-coating the groove as well as the circumference of the fiber.

Figure 10A shows an embodiment with a protective cover element 23 comparable to that of Figure 5D. Again, a recess to prevent glue or an adhesive from approaching the reflective fiber surface 31 may be provided atop the fiber endpiece 30. Again, the protective cover element 23 provides hermetic sealing and, in Figure 10A, can further be used here for achieving proper alignment of the fiber endpiece 30 along the remaining third direction x, that is along the axial position of the optoelectronic device 2 or the active area, respectively. Again, the protective cover element 23 may be formed by injection molding or any other process and may be attached by using an adhesive, such as epoxy. It can be attached to the substrate or printed circuit board as well. Figure 10B shows an embodiment with an inclined fiber axis (compare Figure 6D). Another embodiment for obviating the need for active alignment along the direction x (alternatively to Figure 10A) is presented in Figure 10C where an additional piece or region of material (of the FEM block 15 or of another piece of material) is present, thereby forming an end stop surface 17 against which the tapered tip of the fiber endpiece 30 will abut upon fiber insertion. Accordingly, an end stop for easier positioning of the fiber is provided thereby. By the way, hermetic sealing may easily be achieved by covering the top of the optoelectronic module with a flat piece of glass or another substrate glued onto it. Figure 10D shows an embodiment in which a micro-optical element such as a focusing lens 7 is provided which may, for instance, be shaped as a surface or including a surface of a bottom groove 5'. Furthermore, the at least one micro-optical element 7 may include a portion of an upper surface 29 (see Figure 9A, for instance) or both surfaces in combination. The micro-optical element 7 can be present also in other embodiments, for instance in embodiments where no end stop surface 17 or end stop portion is present, where there is a distance between the fiber endpiece 30 and the surface 29 and/or where no widened recess is present at all. The micro-optical element 7 may further be combined with any figure, claim or other embodiment of the present application.

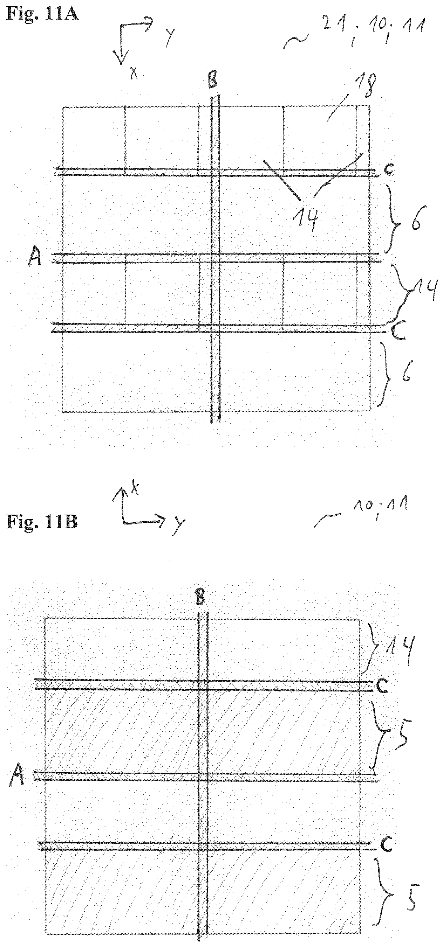

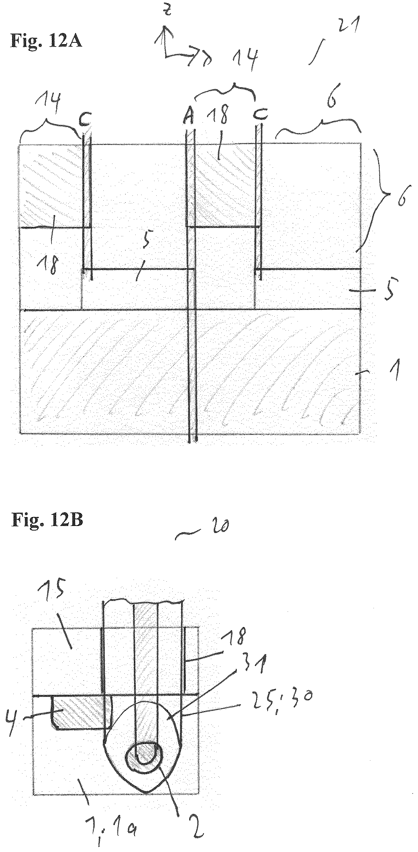

For optoelectronic modules 20 with at least one or some of the electrical contacts arranged at the same side of the substrate 1 as the optoelectronic device 2, or for modules in which for other reasons (for instance because of an opaque material used as the cover layer 10 or FEM structure 14) the FEM block 15 is narrower along the lateral direction x than the substrate piece 1, Figures 11A to 12B show an exemplary further way of cutting off debris portions. This is comparable to Figures 7D to 8C explained above in which the FEM blocks 15 are narrower along the other lateral direction y. Accordingly, both embodiments (regarding the directions x, y) may be exchanged or combined with one another for any embodiment of the application. As in Figure 7D, Figure 11A shows a top view of the cover layer 10 or further substrate 11 in which only the grooves 18 are formed. According to Figure 11B showing the bottom surface of the further substrate 11 or cover layer 10, bottom grooves 5 are etched (preferably prior to cutting the material of the FEM structures 14 along the cutting lines C from above, see Figure 11A), thereby finally severing the debris portions 6, as more clearly apparent from Figure 12A showing a cross-sectional view along the optical axis of the fibers to be inserted into the grooves 18. Thereby, the optoelectronic module of Figure 12B is obtained in which the tip of the fiber endpiece 30 comprising the reflective fiber surface 31 is extending beyond the groove 18 and is freely exposed above the optoelectronic device 2 on the main surface 1a of the piece of substrate 1 without any material of the FEM block 15 in the light path. Accordingly, the at least one electrical contact 4 is accessible (as in Figure 8C). Of course, the design of the optoelectronic module of Figure 12B can be chosen according to any other figure or other embodiment of the application.

Many modifications and other embodiments set forth herein will come to mind to one skilled in the art to which the embodiments pertain having the benefit of the teachings presented in the foregoing descriptions and the associated drawings. Therefore, it is to be understood that the description and the claims are not to be limited to the specific embodiments disclosed and that modifications and other embodiments are intended to be included within the scope of the appended claims. It is intended that embodiments cover the modifications and variations of the embodiments provided they come within the scope of the appended claims and their equivalents. Although specific terms are employed herein, they are used in a generic and descriptive sense only and not for purposes of limitation.

### List of Reference Signs

- 1: substrate
- 1a: main surface
- 2: optoelectronic device
- 3: first array
- 4: electrical contact
- 5, 5': bottom groove
- 6: debris portion
- 7: micro-optical element
- 8: reflective coating
- 9: reflective surface
- 10: cover layer
- 10a: main surface
- 11; 11a, 11b: further substrate
- 12: surface
- 13: second array
- 14: fiber endpiece mounting structure (FEM structure)
- 15: fiber endpiece mounting block (FEM block)
- 16: surface portion
- 17: end stop surface
- 18: groove
- 19: recess
- 20: optoelectronic module
- 21: compound substrate
- 22: protective cover substrate
- 23: protective cover element
- 24: beam of electromagnetic radiation
- 25: optical fiber
- 30: fiber endpiece
- A, B, C: cut line
- x,y: lateral direction
- z: vertical direction

## Claims

1. A method for forming optoelectronic modules (20) connectable to optical fibers (25), wherein the method at least comprises:
a) forming a compound substrate (21),
- the compound substrate (21) comprising a substrate (1) having a plurality of optoelectronic devices (2) constituting a two-dimensional first array (3) in which the optoelectronic devices (2) are lined up along two lateral directions (x, y),
- the compound substrate (21) further comprising a cover layer (10) on a side of the substrate (1), the cover layer (10) having a plurality of fiber endpiece mounting structures (14) for mounting fiber endpieces (30), the fiber endpiece mounting structures (14) constituting a two-dimensional second array (13) in which the fiber endpiece mounting structures (14) are lined up along the two lateral directions (x,y),
- wherein forming the compound substrate (21) comprises arranging the cover layer (10) in an aligned position in relation to the substrate (1), thereby bringing all fiber endpiece mounting structures (14) in alignment to all optoelectronic devices (2) simultaneously, and
b) singulating the compound substrate (21) into pieces, thereby forming a plurality of optoelectronic modules (20) each comprising at least one optoelectronic device (2) covered by an aligned fiber endpiece mounting block (15) shaped to receive at least one fiber endpiece (30) of at least one respective optical fiber (25) in a position self-aligned to the at least one optoelectronic device (2).

2. The method of claim 1, wherein the substrate (1) comprising the plurality of optoelectronic devices (2) is a semiconductor wafer made of silicon, indium phosphide or another semiconductor material or semiconductor material composition, or is a glass wafer, a quartz wafer, or a ceramic wafer.

3. The method of claim 1 or 2, wherein the cover layer (10) is a further substrate (11) and wherein forming the compound substrate (21) includes bonding the substrate (1) and the further substrate (11) onto one another in an aligned position relative to each other.

4. The method of claim 3, wherein at least one of the substrate (1) and the further substrate (11) is made of a semiconductor material, such as silicon or indium phosphide, for instance, of ceramics, of glass, of quartz or of a synthetic material, such as a polymer, and wherein the fiber endpiece mounting structures (14) are formed in the further substrate (11) prior to bonding both substrates (1, 11) onto one another.

5. The method of claim 3 or 4, wherein the fiber endpiece mounting structures (14) are formed in at least one surface (12) of the substrate (1) or of the further substrate (11) by means of UV imprint lithography, reactive ion etching, injection molding, and/or another technique of semiconductor manufacturing or of micro-electro-mechanical system manufacturing, thereby forming the fiber endpiece mounting structures (14) in an exposed portion of the substrate (1) or in the further substrate (11).

6. The method of one of claims 1 to 3, wherein the cover layer (10) is formed by depositing a cover material onto the substrate (1) comprising the optoelectronic devices (2) and wherein an exposed surface (12) of the cover layer (10) thus deposited is patterned subsequently, thereby forming a plurality of aligned fiber endpiece mounting structures (14) in the cover layer (10) in positions aligned to the optoelectronic devices (2).

7. The method of one of claims 1 to 6, wherein injection molding, UV imprint lithography, reactive ion etching and/or another technique of semiconductor manufacturing or micro-electro-mechanical system manufacuring is applied for patterning an exposed surface (12) of the cover layer (10) to form the plurality of fiber endpiece mounting structures (14).

8. The method of one of claims 1 to 7, wherein for each optoelectronic device (2) an associated fiber endpiece mounting structure (14) is formed which at least comprises a surface portion (16) shaped to receive a fiber endpiece (30) free of play and/or shaped to insert a fiber endpiece (30) in a position fixed in two or three directions.

9. The method of claim 8, wherein each fiber endpiece mounting structure (14) comprises a groove (18) for attaching an optical fiber (25) with its axial extension oriented parallel to a main surface (10a) of the cover layer (10) or with its axial extension oriented at an angle to a main surface (10a) of the cover layer (10).

10. The method of claim 9, wherein each fiber endpiece mounting structure (14) comprises an end stop surface (17) for defining a maximum length of a fiber endpiece (30) to be inserted in the groove (18), wherein the end stop surface (17) is defining the lateral end of the groove (18) or is located at a distance from the groove (18), for instance behind a widened recess (19) wider than the groove (18).

11. The method of one of claims 1 to 10, wherein each fiber endpiece mounting structure (14) is formed so as to comprise a slanted surface which is slanted such as to reflect a beam of electromagnetic radiation from an optical fiber (25) onto a respective one of the optoelectronic devices (2) or vice versa.

12. The method of claim 11, wherein the reflective surface (9) is covered with a reflective coating (8) or is slanted at an angle suitable for reflecting a beam of electromagnetic radiation by means of to total internal reflection.

13. The method of one of claims 1 to 12, wherein the method further comprises either mounting an additional protective cover substrate (22) onto a surface of the substrate (1), of the cover layer (10) or of the further substrate (11) before singulating the compound substrate (21) thus obtained, or mounting protective cover elements (23) on at least some of the optoelectronic modules (20) after singulating the compound substrate (21).

## Patentansprüche

1. Verfahren zum Ausbilden von optoelektronischen Modulen (20), die an optische Fasern (25) anschließbar sind, wobei das Verfahren mindestens umfasst:
a) Ausbilden eines Verbundsubstrats (21),
- wobei das Verbundsubstrat (21) ein Substrat (1) mit mehreren optoelektronischen Vorrichtungen (2) aufweist, die eine zweidimensionale erste Anordnung (3) bilden, in der die optoelektronischen Vorrichtungen (2) entlang zweier Seitenrichtungen (x, y) aufgereiht sind,
- wobei das Verbundsubstrat (21) darüber hinaus eine Deckschicht (10) auf einer Seite des Substrats (1) aufweist, wobei die Deckschicht (10) mehrere Faserendstückmontagestrukturen (14) zum Montieren von Faserendstücken (30) hat, wobei die Faserendstückmontagestrukturen (14) eine zweidimensionale zweite Anordnung (13) bilden, in der die Faserendstückmontagestrukturen (14) entlang der zwei Seitenrichtungen (x, y) aufgereiht sind,
- wobei das Ausbilden des Verbundsubstrats (21) umfasst, die Deckschicht (10) in einer in Bezug auf das Substrat (1) ausgerichteten Position anzuordnen, wodurch gleichzeitig alle Faserendstückmontagestrukturen (14) in Ausrichtung mit allen optoelektronischen Vorrichtungen (2) gebracht werden, und
b) Vereinzeln des Verbundsubstrats (21) in Stücke, wodurch mehrere optoelektronische Module (20) gebildet werden, wovon jedes mindestens eine optoelektronische Vorrichtung (2) aufweist, die mit einem ausgerichteten Faserendsückmontageblock (15) abgedeckt ist, der dazu gestaltet ist, mindestens ein Faserendstück (30) mindestens einer jeweiligen optischen Faser (25) in einer zu der mindestens einen optoelektronischen Vorrichtung (2) selbstausgerichteten Position aufzunehmen.

2. Verfahren nach Anspruch 1, wobei das Substrat (2) mehrere optoelektronische Vorrichtungen (2) in einem Halbleiterwafer aufweist, der aus Silicium, Indiumphosphid oder einem anderen Halbleitermaterial oder einer anderen Halbleitermaterialzusammensetzung hergestellt ist oder ein Glaswafer, ein Quarzwafer oder ein Keramikwafer ist.

3. Verfahren nach Anspruch 1 oder 2, wobei es es sich bei der Deckschicht (10) um ein weiteres Substrat (11) handelt, und wobei das Ausbilden des Verbundsubstrats (21) umfasst, das Substrat (1) und das weitere Substrat (11) in einer ausgerichteten Position aneinander zu binden.

4. Verfahren nach Anspruch 3, wobei das Substrat (1) und/oder das weitere Substrat (11) aus einem Halbleitermaterial wie etwa Silicium oder Indiumphosphid, zum Beispiel aus Keramik, Glas, Quarz oer einem synthetischen Material wie etwa einem Polymer hergestellt ist, und wobei die Faserendstückmontagestrukturen (14) in dem weiteren Substrat (11) ausgebildet werden, bevor beide Substrate (1, 11) aneinander gebunden werden.

5. Verfahren nach Anspruch 3 oder 4, wobei die Faserendstückmontagestrukturen (14) in mindestens einer Fläche (12) des Substrats (1) oder des weiteren Substrats mittels UV-Drucklithografie, reaktiven Ionenätzens, Spritzgießens und/oder eines anderen technischen Verfahrens der Halbleiterherstellung oder Herstellung mikroelektromechanischer Systeme ausgebildet werden, wodurch die Faserendstückmontagestrukturen (14) in einem freiliegenden Teilbereich des Substrats (1) oder im weiteren Substrat (11) ausgebildet werden.

6. Verfahren nach einem der Ansprüche 1 bis 3, wobei die Deckschicht (10) durch Abscheiden eines Deckmaterials auf dem die optoelektronischen Vorrichtungen (2) umfassenden Substrat (1) ausgebildet wird, und wobei eine freiliegende Fläche (12) der so abgeschiedenen Deckschicht (10) anschließend strukturiert wird, wodurch mehrere ausgerichtete Faserendstückmontagestrukturen (14) in der Deckschicht (10) in auf die optoelektronischen Vorrichtungen (2) ausgerichteten Positionen ausgebildet werden.

7. Verfahren nach einem der Ansprüche 1 bis 6, wobei UV-Drucklithografie, reaktives Ionenätzen und/oder ein anderes technisches Verfahren der Halbleiterherstellung oder Herstellung mikroelektromechanischer Systeme zum Strukturieren einer freiliegenden Fläche (12) angewendet wird, um mehrere Faserendstückmontagestrukturen (14) auszubilden.

8. Verfahren nach einem der Ansprüche 1 bis 7, wobei für jede optoelektronische Vorrichtung (2) eine zugehörige Faserendstückmontagestruktur (14) ausgebildet wird, die zumindest einen Flächenteilbereich (16) hat, der dazu gestaltet ist, ein Faserendstück (30) spielfrei aufzunehmen, und/oder dazu gestaltet ist, ein Faserendstück (3) in einer, in zwei oder drei Richtungen fixierten Position einzusetzen.

9. Verfahren nach Anspruch 8, wobei jede Faserendstückmontagestruktur (14) eine Nut (18) aufweist, um eine optische Faser (25) mit ihrer axialen Erstreckung parallel zu einer Hauptfläche (10a) der Deckschicht (10) ausgerichtet oder mit ihrer axialen Erstreckung in einem Winkel zu einer Hauptfläche (10a) der Deckschicht (10) ausgerichtet anzubringen.

10. Verfahren nach Anspruch 9, wobei jede Faserendstückmontagestruktur (14) eine Endstoppfläche (17) aufweist, um eine maximale Länge eines in die Nut (18) einzusetzenden Faserendstücks (18) zu definieren, wobei die Endstoppfläche (17) das seitliche Ende der Nut (18) definiert oder sich in einem Abstand von der Nut (18), zum Beispiel hinter einer verbreiterten Ausnehmung (19) befindet, die breiter ist als die Nut (18).

11. Verfahren nach einem der Ansprüche 1 bis 10, wobei jede Faserendstückmontagestruktur (14) so ausgebildet ist, dass sie eine schräge Fläche aufweist, die abgeschrägt ist, um einen Strahl elektromagnetischer Strahlung von einer optischen Faser (25) auf eine jeweilige der optoelektronischen Vorrichtungen (2) zu reflektieren, und umgekehrt.

12. Verfahren nach Anspruch 11, wobei die reflektierende Fläche (9) mit einer reflektierenden Beschichtung (8) bedeckt oder in einem Winkel abgeschrägt ist, der geeignet ist, einen Strahl elektromagnetischer Strahlung mittels interner Totalreflexion zu reflektieren.

13. Verfahren nach einem der Ansprüche 1 bis 12, wobei das Verfahren darüber hinaus umfasst, entweder ein zusätzliches Schutzabdecksubstrat (22) auf einer Fläche des Substrats (1), der Deckschicht (10) oder des weiteren Substrats (11) anzubringen, bevor das so erhaltene Verbundsubstrat (21) vereinzelt wird, oder Schutzabdeckelemente (23) an zumindest einigen der optoelektronischen Module (1) anzubringen, nachdem das Verbundsubstrat (21) vereinzelt wurde.

## Revendications

1. Procédé destiné à former des modules optoélectroniques (20) pouvant être connectés à des fibres optiques (25), sachant que le procédé comprend au moins :
a) la formation d'un substrat composite (21),
- le substrat composite (21) comprenant un substrat (1) présentant une pluralité de dispositifs optoélectroniques (2) constituant un premier réseau bidimensionnel (3) dans lequel les dispositifs optoélectroniques (2) sont alignés le long de deux directions latérales (x, y),
- le substrat composite (21) comprenant en outre une couche de recouvrement (10) d'un côté du substrat (1), la couche de recouvrement (10) présentant une pluralité de structures de montage d'embouts de fibre (14) destinés à monter des embouts de fibre (30), les structures de montage d'embouts de fibre (14) constituant un deuxième réseau bidimensionnel (13) dans lequel les structures de montage d'embouts de fibre (14) sont alignées le long des deux directions latérales (x, y),
- sachant que la formation du substrat composite (21) comprend l'agencement de la couche de recouvrement (10) dans une position alignée par rapport au substrat (1) de façon à mettre simultanément toutes les structures de montage d'embouts de fibre (14) en alignement avec tous les dispositifs optoélectroniques (2), et
b) la séparation du substrat composite (21) en parties de façon à former une pluralité de modules optoélectroniques (20) comprenant chacun au moins un dispositif optoélectronique (2) recouvert par un bloc de montage d'embouts de fibre (15) aligné formé pour recevoir au moins un embout de fibre (30) d'au moins une fibre optique (25) respective dans une position autoalignée avec l'au moins un dispositif optoélectronique (2).

2. Le procédé de la revendication 1, sachant que le substrat (1) comprenant la pluralité de dispositifs optoélectroniques (2) est une plaquette de semiconducteur composée de silicium, de phosphure d'indium ou d'un autre matériau semiconducteur ou d'une composition de matériaux semiconducteurs, ou est une plaquette de verre, une plaquette de quartz, ou une plaquette de céramique.

3. Le procédé de la revendication 1 ou 2, sachant que la couche de recouvrement (10) est un substrat supplémentaire (11) et sachant que la formation du substrat composite (21) inclut la liaison du substrat (1) et du substrat supplémentaire (11) l'un sur l'autre dans une position alignée l'un par rapport à l'autre.

4. Le procédé de la revendication 3, sachant qu'au moins l'un du substrat (1) et du substrat supplémentaire (11) est composé d'un matériau semiconducteur tel que du silicium ou du phosphure d'indium, par exemple de céramique, de verre, de quartz ou d'un matériau synthétique tel qu'un polymère, et sachant que les structures de montage d'embouts de fibre (14) sont formées dans le substrat supplémentaire (11) avant liaison des deux substrats (1, 11) l'un sur l'autre.

5. Le procédé de la revendication 3 ou 4, sachant que les structures de montage d'embouts de fibre (14) sont formées dans au moins une surface (12) du substrat (1) ou du substrat supplémentaire (11) par lithographie par impression sous UV, gravure par ions réactifs, moulage par injection, et/ou une autre technique de fabrication de semiconducteur ou de fabrication de système micro-électro-mécanique de façon à former les structures de montage d'embouts de fibre (14) dans une partie exposée du substrat (1) ou dans le substrat supplémentaire (11).

6. Le procédé de l'une des revendications 1 à 3, sachant que la couche de recouvrement (10) est formée par dépôt d'un matériau de recouvrement sur le substrat (1) comprenant les dispositifs optoélectroniques (2) et sachant qu'une surface exposée (12) de la couche de recouvrement (10) déposée de la sorte est consécutivement dotée de motifs de façon à former une pluralité de structures de montage d'embouts de fibre (14) alignées dans la couche de recouvrement (10) dans des positions alignées avec les dispositifs optoélectroniques (2).

7. Le procédé de l'une des revendications 1 à 6, sachant que le moulage par injection, la lithographie par impression sous UV, la gravure par ions réactifs et/ou une autre technique de fabrication de semiconducteur ou de fabrication de système micro-électro-mécanique est appliqué(e) pour doter de motifs une surface exposée (12) de la couche de recouvrement (10) afin de former la pluralité de structures de montage d'embouts de fibre (14).

8. Le procédé de l'une des revendications 1 à 7, sachant que pour chaque dispositif optoélectronique (2), une structure de montage d'embouts de fibre (14) associée est formée qui comprend au moins une partie de surface (16) formée pour recevoir un embout de fibre (30) exempt de jeu et/ou formée pour insérer un embout de fibre (30) dans une position fixe dans deux ou trois directions.

9. Le procédé de la revendication 8, sachant que chaque structure de montage d'embouts de fibre (14) comprend une rainure (18) destinée à attacher une fibre optique (25) de façon que son extension axiale soit orientée parallèlement à une surface principale (10a) de la couche de recouvrement (10) ou que son extension axiale soit orientée selon un angle par rapport à une surface principale (10a) de la couche de recouvrement (10).

10. Le procédé de la revendication 9, sachant que chaque structure de montage d'embouts de fibre (14) comprend une surface de butée d'extrémité (17) destinée à définir une longueur maximale d'un embout de fibre (30) à insérer dans la rainure (18), sachant que la surface de butée d'extrémité (17) définit l'extrémité latérale de la rainure (18) ou est située à une distance de la rainure (18), par exemple derrière un évidement élargi (19) plus large que la rainure (18).

11. Le procédé de l'une des revendications 1 à 10, sachant que chaque structure de montage d'embouts de fibre (14) est formée de manière à comprendre une surface inclinée qui est inclinée de façon à réfléchir un faisceau de rayonnement électromagnétique depuis une fibre optique (25) sur l'un respectif des dispositifs optoélectroniques (2) ou inversement.

12. Le procédé de la revendication 11, sachant que la surface réfléchissante (9) est recouverte d'un revêtement réfléchissant (8) ou est inclinée selon un angle adéquat pour réfléchir un faisceau de rayonnement électromagnétique par réfléchissement interne total.

13. Le procédé de l'une des revendications 1 à 12, sachant que le procédé comprend en outre soit le montage d'un substrat de recouvrement protecteur additionnel (22) sur une surface du substrat (1), de la couche de recouvrement (10) ou du substrat supplémentaire (11) avant séparation du substrat composite (21) obtenu de la sorte, soit le montage d'éléments de recouvrement protecteurs (23) sur au moins quelques-uns des modules optoélectroniques (20) après séparation du substrat composite (21).
